# EUROPÄISCHE PATENTANMELDUNG

(11) **EP 4 751 548 A1**
(43) Veröffentlichungstag der Anmeldung: **03.06.2026**
(21) Anmeldenummer: 24216898.7
(22) Anmeldetag: 02.12.2024
(51) Int. Cl.: A01D 34/73, B26B 19/38

(54) **KLINGE, VERFAHREN, MÄHWERK, RASENMÄHER UND/ODER MOTORSENSE**

(71) Anmelder: Andreas Stihl AG & Co. KG, 71336 Waiblingen (DE)
(72) Erfinder: SCHLEGL, Martin, 73635 Rudersberg (DE); WOLF, Andreas, 71397 Leutenbach (DE)
(74) Vertreter: Patentanwälte Ruff, Wilhelm, Beier, Dauster & Partner mbB

(57) **Zusammenfassung**

Die Erfindung betrifft eine Klinge (1) für ein Mähwerk (20), wobei die Klinge (1) aufweist: Einen entlang einer Schlitzrichtung (S) der Klinge (1) längserstreckten Schlitz (2), der dazu ausgebildet ist, ein Klingenlagerelement (21) des Mähwerks (20) derart aufzunehmen, dass die Klinge (1) um das aufgenommene Klingenlagerelement (21) herum drehbar und entlang der Schlitzrichtung (S) relativ zu dem aufgenommenen Klingenlagerelement (21) verschiebbar ist, eine erste Klingenzone (3), innerhalb welcher zumindest ein Randabschnitt (4) eines umlaufenden Schlitzrands (5) des Schlitzes (2) verläuft, und eine zweite Klingenzone (6), die sich an einer Zonengrenze (7) der Klinge (1) an die erste Klingenzone (3) anschließt, wobei die erste Klingenzone (3) härter als die zweite Klingenzone (6) ist.

## Beschreibung

### ANWENDUNGSGEBIET UND STAND DER TECHNIK

Die Erfindung betrifft eine Klinge für ein Mähwerk. Zudem betrifft die Erfindung ein Verfahren für eine Herstellung wenigstens einer solchen Klinge. Außerdem betrifft die Erfindung ein Mähwerk für einen Rasenmäher und/oder für eine Motorsense. Ferner betrifft die Erfindung einen derartigen Rasenmäher und/oder eine derartige Motorsense.

### AUFGABE UND LÖSUNG

Es ist eine Aufgabe der vorliegenden Erfindung, eine Klinge für ein Mähwerk, ein Verfahren für eine Herstellung wenigstens einer derartigen Klinge, ein Mähwerk für einen Rasenmäher und/oder für eine Motorsense sowie einen derartigen Rasenmäher und/oder eine derartige Motorsense zu schaffen, die, insbesondere jeweils, verbesserte Eigenschaften aufweisen.

Diese Aufgabe wird gelöst durch die Gegenstände der unabhängigen Patentansprüche. Bevorzugte Ausführungsformen sind Gegenstand der abhängigen Patentansprüche. Der Wortlaut sämtlicher Ansprüche wird durch ausdrückliche Bezugnahme zum Inhalt der vorliegenden Beschreibung gemacht.

Eine erfindungsgemäße Klinge ist zur Verwendung in einem Mähwerk ausgebildet. Die Klinge für das Mähwerk weist einen Schlitz auf, welcher entlang einer Schlitzrichtung der Klinge längserstreckt ist. Der Schlitz ist dazu ausgebildet, ein Klingenlagerelement des Mähwerks aufzunehmen. Dabei ist das Klingenlagerelement des Mähwerks in dem Schlitz derart aufnehmbar, dass die Klinge um das aufgenommene Klingenlagerelement herum drehbar und entlang der Schlitzrichtung relativ zu dem aufgenommenen Klingenlagerelement verschiebbar ist. Die Klinge hat eine erste Klingenzone. Der Schlitz hat einen umlaufenden Schlitzrand. Zumindest ein Randabschnitt des Schlitzrands verläuft innerhalb der ersten Klingenzone. Die Klinge weist zudem eine zweite Klingenzone sowie eine Zonengrenze auf. Die erste Klingenzone und die zweite Klingenzone sind insbesondere verschieden voneinander. Die zweite Klingenzone schließt sich an der Zonengrenze an die erste Klingenzone an. Insbesondere verläuft die Zonengrenze direkt zwischen der ersten Klingenzone und der zweiten Klingenzone. Die erste Klingenzone der Klinge ist härter als, insbesondere oberflächenhärter als, die zweite Klingenzone der Klinge. Die zweite Klingenzone ist entsprechend weniger hart als die erste Klingenzone. Die zweite Klingenzone kann weniger spröde sein als die erste Klingenzone. "Weniger spröde" kann "weniger brüchig" und/oder "zäher" und/oder "duktiler" bedeuten.

Die relativ zu der zweiten Klingenzone gesteigerte Härte der ersten Klingenzone erweist sich insbesondere als vorteilhaft, weil die erste Klingenzone dadurch besonders widerstandsfähig gegenüber einer im Betrieb zwischen dem Klingenlagerelement und dem innerhalb der ersten Klingenzone verlaufenden Randabschnitt des Schlitzrands wirkenden Hertzschen Pressung ist. Insbesondere kann somit einer unerwünschten plastischen Deformation und/oder Aufwulstung des innerhalb der ersten Klingenzone verlaufenden Randabschnitts infolge der Flächenpressung zwischen dem Klingenlagerelement und dem Randabschnitt entgegengewirkt werden, insbesondere wobei die weniger harte zweite Klingenzone für eine insgesamt ausreichende Duktilität der Klinge sorgt. Die Kombination unterschiedlicher Härten der ersten Klingenzone und der zweiten Klingenzone kann insofern einen besonders vorteilhaften Kompromiss negativkorrelierter Eigenschaften der Klinge ermöglichen, insbesondere indem besagte Eigenschaften lokal unterschiedlich eingestellt werden. Insbesondere kann dies von Vorteil bei großen Umdrehungsdrehzahlen eines mit einer derartigen Klinge ausgestatteten Mähwerks und/oder im Hinblick auf mähbetriebsbedingte Impulse sein.

Die Begriffe "umfassen" oder "haben" können untereinander und für den Begriff "aufweisen" synonym verwendet werden.

Die Formulierung "- sowie alternativ oder zusätzlich =` kann im vorliegenden Zusammenhang durch die Formulierung "und/oder" gleichbedeutend ersetzt werden, und umgekehrt.

Zweckmäßig kann die Klinge zum Schneiden bzw. Mähen von Gras ausgebildet sein. Insbesondere kann die Klinge dazu ausgebildet sein, Gras im sogenannten Freischnittverfahren ohne Gegenklinge zu schneiden. Zusätzlich oder alternativ kann die Klinge eine Schneid- bzw. Mähklinge und/oder Messerklinge sein. Zusätzlich oder alternativ kann die Klinge einstückig sein. Zusätzlich oder alternativ kann die Klinge flach bzw. eben sein.

In Ausgestaltung der Erfindung verläuft der Schlitzrand vollständig innerhalb der ersten Klingenzone. Dabei verläuft die Zonengrenze um den Schlitz herum. Insbesondere verläuft die Zonengrenze vollständig um den Schlitz herum um. Die Zonengrenze kann parallel zu dem Schlitzrand verlaufen, insbesondere in einer Draufsicht in einer Klingendickenrichtung der Klinge.

In weiterer Ausgestaltung der Erfindung verläuft die Zonengrenze in einem Abstand von maximal 2 mm zu dem Schlitzrand. Zweckmäßig beträgt der Abstand, in welchem die Zonengrenze zu dem Schlitzrand verläuft, minimal 0,001 mm, insbesondere minimal 0,05 mm. Ein derartiger Abstand erlaubt einen besonders guten Kompromiss zwischen der Härte am Schlitzrand und der Zähigkeit der Klinge insgesamt. Der Abstand kann einer Einhärtetiefe entsprechen.

In einer Draufsicht in Klingendickenrichtung ist eine minimale Erstreckung der zweiten Zone von der Zonengrenze weg insbesondere mindestens so groß wie der Abstand zwischen Zonengrenze und Schlitzrand. Mit anderen Worten: Die weniger harte zweie Klingenzone kann überall wenigstens so breit sein wie der Abstand zwischen Zonengrenze und Schlitzrand. Insbesondere lässt sich auf diese Weise ein besonders vorteilhafter Kompromiss zwischen Duktilität und Härte bezogen auf die gesamte Klinge erzielen.

In weiterer Ausgestaltung der Erfindung weist eine Härte, insbesondere eine Oberflächenhärte, der zweiten Klingenzone einen Härtewert von 400 HV bis 500 HV, insbesondere von 450 HV, auf.

Zweckmäßig können Härtewerte im Sinne der vorliegenden Offenbarung gemäß dem in EN ISO 6507-1 bis EN ISO 6507-4 geregelten Vickers-Härteprüfverfahren bestimmt werden. Die Bestimmung eines derartigen Härtewerts kann bei einer Prüfkraft von 1 Kilopond und bei einer Einwirkdauer der Prüfkraft von 10 s bis 15 s erfolgen.

Zweckmäßig kann ein jeweiliger Härtewert einem Durchschnitt mehrerer Prüfergebnisse entsprechen. Dies kann einer möglichen Inhomogenität der Härte innerhalb einer jeweiligen Klingenzone Rechnung tragen.

In weiterer Ausgestaltung der Erfindung weist eine, insbesondere andere, Härte, insbesondere eine andere Oberflächenhärte, der ersten Klingenzone einen, insbesondere anderen, Härtewert auf. Der Härtewert der Härte der ersten Klingenzone beträgt 800 HV bis 900 HV, insbesondere 850 HV, auf. Bei einer derartigen Härte der ersten Klingenzone lässt sich eine besonders vorteilhafte Widerstandsfähigkeit des innerhalb der ersten Klingenzone verlaufenden Randabschnitts erreichen.

In weiterer Ausgestaltung der Erfindung weist ein Material der ersten Klingenzone und/oder der zweiten Klingenzone einen Vergütungsstahl auf oder besteht aus einem solchen Vergütungsstahl. Insbesondere hat der Vergütungsstahl einen Kohlenstoffanteil von weniger als 0,7 Masseprozent und/oder von mehr als 0,2 Masseprozent. Insbesondere umfassen oder sind das Material der ersten Klingenzone und das Material der zweiten Klingenzone aus verschiedene Vergütungsstähle.

In weiterer Ausgestaltung der Erfindung ist die erste Klingenzone martensitisch gehärtet, insbesondere oberflächengehärtet und/oder randschichtgehärtet. Die erste Klingenzone kann mittels Induktionserwärmung und/oder mittels Lasererwärmung martensitisch gehärtet sein.

Zweckmäßig kann der Abstand zwischen Zonengrenze und Schlitzrand einer induktiven Einhärtetiefe entsprechen.

Zweckmäßig kann sich zur martensitischen Härtung der ersten Klingenzone an die Induktionserwärmung und/oder an die Lasererwärmung direkt ein Abschreckvorgang zum Entwärmen mittels Umgebungsluft und/oder mittels eines (Druck-)Luftstroms und/oder mittels eines Flüssigkeitsbads und/oder mittels eines Flüssigkeitsstroms anschließen.

In weiterer Ausgestaltung der Erfindung ist die erste Klingenzone nitriert oder nitrocarboriert oder carbonitriert oder einsatzgehärtet. Insbesondere ist dabei die zweite Klingenzone nicht nitriert oder nicht nitrocarboriert oder nicht carbonitriert oder nicht einsatzgehärtet.

In weiterer Ausgestaltung der Erfindung weist die erste Klingenzone eine angeschweißte Panzerungsschicht auf oder ist eine derartige angeschweißte Panzerungsschicht. Insbesondere weist ein Material der Panzerungsschicht einen Schnellarbeitsstahl auf oder besteht aus einem solchen Schnellarbeitsstahl.

In weiterer Ausgestaltung der Erfindung weist die erste Klingenzone eine Hartstoffbeschichtung auf oder ist eine derartige Hartstoffbeschichtung. Die Hartstoffbeschichtung kann eine PVD(Physical Vapor Deposition)-Hartstoffbeschichtung oder eine CVD(Chemical Vapor Deposition)-Hartstoffbeschichtung sein. Ein Material der Hartstoffbeschichtung kann insbesondere Titancarbid und/oder Titannitrid aufweisen oder aus Titancarbid und/oder aus Titannitrid bestehen.

In weiterer Ausgestaltung der Erfindung beschreibt eine Außenkontur der Klinge ein Parallelogramm ein. Insbesondere hat das Parallelogramm einen stumpfen Innenwinkel. Der stumpfe Innenwinkel kann minimal 95° sein. Der stumpfe Innenwinkel kann maximal 120° sein. Insbesondere ist der stumpfe Innenwinkel 100°. Die Außenkontur hat zwei parallel zueinander und schräg zu der Schlitzrichtung erstreckte Außenkanten. Die Außenkanten bilden jeweils eine Schneidkante der Klinge zum Durchtrennen eines Schnittguts aus. Insbesondere sind die Schneidkanten jeweils von einer Schneide der Klinge aufgewiesen, wobei die Schneiden härter, insbesondere oberflächenhärter, als die zweite Klingenzone sind.

Zweckmäßig kann die Klinge sich, insbesondere hauptsächlich, in zwei Dimensionen bzw. Richtungen, insbesondere einer Radialrichtung und einer Drehrichtung, erstrecken bzw. ausdehnen und in diesen zwei Dimensionen im Wesentlichen Parallelogramm-förmig sein.

Im Wesentlichen Parallelogramm-förmig kann Nachhergehendes bzw. Folgendes bedeuten: Die Parallelogramm-förmige Grundform der Klinge kann erkennbar sein. Die Grundform kann dem von der Außenkontur der Klinge einbeschriebenen Parallelogramm entsprechen. Zusätzlich oder alternativ kann die Klinge mindestens eine abgerundete Ecke aufweisen. Insbesondere kann ein Ecken-Radius, insbesondere ein Wert des Ecken-Radius, einer, insbesondere jeweiligen, abgerundeten Ecke maximal 10 %, insbesondere maximal 5 %, einer Länge, insbesondere eines Werts der Länge, einer insbesondere kurzen, Seite des Parallelogramms sein. Zusätzlich oder alternativ können gegenüberliegende Seiten des Parallelogramms im Wesentlichen bzw. etwa, insbesondere genau, gleich lang sein. Insbesondere kann im Wesentlichen gleich lang bedeuten, dass die gegenüberliegenden Seiten des Parallelogramms eine Längenabweichung von maximal 2,5 %, insbesondere maximal 1 %, aufweisen können. Zusätzlich oder alternativ können gegenüberliegende Seiten des Parallelogramms im Wesentlichen bzw. etwa, insbesondere genau, parallel sein. Insbesondere kann "im Wesentlichen parallel" bedeuten, dass die gegenüberliegenden Seiten des Parallelogramms eine Winkelabweichung von maximal 2,5°, insbesondere maximal 1°, aufweisen können. Zusätzlich oder alternativ können gegenüberliegende Innenwinkel, insbesondere Werte der Innenwinkel, des Parallelogramms im Wesentlichen bzw. etwa, insbesondere genau, gleich sein. Insbesondere kann "im Wesentlichen gleich" bedeuten, dass die gegenüberliegenden Innenwinkel des Parallelogramms eine Winkelabweichung von maximal 2,5°, insbesondere maximal 1°, aufweisen können.

Zweckmäßig kann der Schlitz ein Führungsschlitz und/oder ein Längsschlitz und/oder ein Langloch sein. Zusätzlich oder alternativ kann der Schlitz eine Länge von minimal 25 % und/oder maximal 75 %, insbesondere 50 %, einer Länge einer, insbesondere langen, Seite des Parallelogramms aufweisen. Zusätzlich oder alternativ kann der Schlitz zur Aufnahme des Klingenlagerelements zur, insbesondere beweglich gelagerten, Halterung der Klinge durch das Klingenlagerelement ausgebildet sein. Zusätzlich oder alternativ kann der Schlitz genau zwei Enden aufweisen bzw. haben. Zusätzlich oder alternativ können die Enden, insbesondere jeweils, abgerundet bzw. rund, insbesondere halbrund, sein. Weiter zusätzlich oder alternativ kann der Schlitz in einer durch das Parallelogramm definierten Ebene verlaufen.

Zweckmäßig sind definiert je ein Randabschnitt des Schlitzrandes eines der Enden des Schlitzes. Insbesondere verlaufen zumindest diese beiden Randabschnitte in der ersten Klingenzone oder jeweils nur in einer ersten Klingenzone. Mit anderen Worten: Der Schlitzrand kann zumindest oder nur an den die Enden des Schlitzes definierenden Randabschnitten relativ zu der zweiten Klingenzone härter sein.

Es ist denkbar, dass der Schlitz geradlinig oder gebogen, insbesondere S-förmig oder Bananenförmig, verläuft.

Zweckmäßig kann die Klinge, insbesondere in der Art einer Wendeklinge, zwischen zwei relativ zueinander, insbesondere um 180° um das Klingenlagerelement herum, verdrehten Schneidpositionen zum Schneiden von Schnittgut verwendet werden. Zu einem Zeitpunkt kann die Klinge, insbesondere entweder, in der einen Schneidposition, insbesondere mit einer dieser Schneidposition zugeordneten Schneidausrichtung, oder in der anderen Schneidposition, insbesondere mit einer dieser anderen Schneidposition zugeordneten Schneidausrichtung verschoben, insbesondere und gedreht, sein. Zusätzlich oder alternativ können die Schneidposition und die Schneidausrichtungen, insbesondere jeweils, stabil und/oder durch eine Zentrifugalkraft erzeugt bzw. verursacht durch eine Drehung der Rotoreinrichtung um die Rotor-Drehachse herum, definiert sein. Insbesondere kann die Rotor-Drehachse eine Mähwerk-Drehachse, insbesondere eine Mähwerk-Gesamtdrehachse, sein.

Zweckmäßig verläuft der Schlitz punktsymmetrisch und/oder zweizählig drehsymmetrisch in der Klinge. Dies kann ermöglichen, eine Unwucht der Klinge, insbesondere des Mähwerks, besonders gering zu halten oder sogar ganz zu vermeiden und/oder ein besonders gleiches Schnitt- bzw. Mähergebnis und/oder einen besonders gleichen Schnitt bzw. Mähkreis zu erreichen. Insbesondere kann der Schlitz punktsymmetrisch und/oder zweizählig drehsymmetrisch in der Klinge angeordnet sein und geformt verlaufen. Zusätzlich oder alternativ kann der Schlitz punktsymmetrisch und/oder zweizählig drehsymmetrisch in Bezug auf einen Schnittpunkt von Diagonalen des Parallelogramms verlaufen.

Zweckmäßig kann der Schlitz nichtparallel zu den Seiten des Parallelogramms, insbesondere in etwa diagonal, verlaufen.

Zweckmäßig sind unmittelbar benachbarte Seiten des Parallelogramms verschieden lang.

Zweckmäßig sind die Schneiden bzw. Schneidkanten der Klinge an zwei gegenüberliegenden langen Seiten des Parallelogramms vorhanden. Insbesondere ist der Schlitz, insbesondere zur Aufnahme des Klingenlagerelements des Mähwerks, derart ausgebildet, dass die Klinge mit der einen Schneidausrichtung mit einer, insbesondere ersten, der Schneidkanten und mit der anderen Schneidausrichtung mit einer anderen, insbesondere zweiten, der Schneidkanten schneiden bzw. mähen kann. Mit anderen Worten: Die Enden der Klinge sind für ein Schneiden bzw. ein Mähen der Klinge mit der einen Schneidausrichtung und mit einer, insbesondere ersten, der Schneidkanten und mit der anderen Schneidausrichtung mit einer anderen, insbesondere zweiten, der Schneidkanten angeordnet. Insbesondere kann die Klinge an zwei kurzen Seiten des Parallelogramms Schneidkanten aufweisen. Zusätzlich oder alternativ können sich die Schneidkanten über die, insbesondere jeweiligen, Seiten im Wesentlichen bzw. etwa, insbesondere genau, vollständig erstrecken. Zusätzlich oder alternativ kann zu einem Zeitpunkt die Klinge, insbesondere entweder, mit der einen Schneidausrichtung mit der einen Schneidkante oder mit der anderen Schneidausrichtung mit der anderen Schneidkante schneiden.

Zweckmäßig kann ein Material der Schneiden einen Schnellarbeitsstahl aufweisen oder aus einem solchen Schnellarbeitsstahl bestehen. Das Material der Schneiden kann an das Material der zweiten Klingenzone, insbesondere im Abstand von der ersten Klingenzone, angeschweißt sein.

Zweckmäßig haben lange Seiten des Parallelogramms eine Länge von minimal 20 mm und/oder maximal 160 mm, insbesondere maximal 80 mm, insbesondere 40 mm. Zusätzlich oder alternativ haben kurze Seiten des Parallelogramms jeweils eine Länge von minimal 10 mm und/oder maximal 80 mm, insbesondere maximal 40 mm, insbesondere 20 mm. Zusätzlich oder alternativ hat der Schlitz eine Länge von minimal 7,5 mm und/oder maximal 30 mm, insbesondere 15 mm.

Ein erfindungsgemäßes Verfahren dient einer Herstellung wenigstens einer erfindungsgemäßen Klinge wie voranstehend beschrieben. Insbesondere wird wenigstens eine Klinge gemäß dem Verfahren hergestellt. Das Verfahren weist einen Schritt a) auf, gemäß welchem ein Bereitstellen eines Stahlbands erfolgt. Das Stahlband weist das Material für zumindest die zweite Klingenzone der wenigstens eine Klinge auf. Das Stahlband kann, insbesondere hintereinander, Material für mehrere Klingen aufweisen. Gemäß einem weiteren Schritt b) des Verfahrens erfolgt ein Austenitisieren des bereitgestellten Stahlbands. Das Verfahren weist ferner einen Schritt c) auf, gemäß welchem ein Anlassen des austenitisierten Stahlbands erfolgt, um eine Härte, insbesondere Oberflächenhärte, des Materials für zumindest die zweite Klingenzone der wenigstens einen Klinge einzustellen. Das Verfahren weist zudem einen Schritt d), gemäß welchem ein Schlitzen des angelassenen Stahlbands erfolgt, um den Schlitz der wenigstens einen Klinge zu erzeugen. Das Schlitzen kann durch Stanzen oder Laserschneiden erfolgen. Das Verfahren hat zudem einen Schritt e), gemäß welchem ein Erzeugen einer anderen Härte, insbesondere Oberflächenhärte, der ersten Klingenzone der zumindest einen Klinge derart erfolgt, dass die andere Härte der ersten Klingenzone größer ist als die Härte der zweiten Klingenzone.

Falls das Schlitzen des angelassenen Stahlbands mittels eines thermischen Schneidprozesses erfolgt, kann es denkbar sein, die dabei in das angelassene Stahlband eingebrachte Wärme für das Härten der ersten Klingenzone gemäß Schritt e) zu verwenden, insbesondere ohne dass ein erneutes und/oder zusätzliches Erwärmen der ersten Klingenzone vorgenommen wird. Ein solcher thermischer Schneidprozess kann beispielsweise Laserschneiden sein.

Zweckmäßig kann das gemäß Schritt a) bereitgestellte Stahlband sowohl das Material für die zweite Klingenzone als auch Material für die erste Klingenzone umfassen. Alternativ oder zusätzlich kann zum Erzeugen der anderen Härte der ersten Klingenzone eine lokale Materialeigenschaftsänderung des Stahlbandmaterials und/oder eine Materialergänzung erfolgen.

Zweckmäßig kann die andere Härte der ersten Klingenzone durch ein martensitisches Härten erzeugt werden. Zum martensitischen Härten kann das Material der ersten Klingenzone mittels magnetischer Induktion und/oder mittels Laser erwärmt, insbesondere und anschließend abgeschreckt, werden. Insbesondere geht mit dem martensitischen Härten eine lokale Gefügeumwandlung des Werkstoffs der ersten Klingenzone in Martensit einher. Insbesondere ergibt sich so ein martensitischer Randabschnitt des Schlitzrands in der ersten Klingenzone.

Alternativ oder zusätzlich kann die andere Härte der ersten Klingenzone durch Nitrieren und/oder Nitrocarburieren und/oder Carbonitrieren und/oder Einsatzhärten erzeugt werden. Weiter zusätzlich oder alternativ kann die andere Härte der ersten Klingenzone durch Aufschweißen einer Panzerungsschicht, insbesondere mit oder aus Schnellarbeitsstahl, erzeugt werden. Weiter alternativ oder zusätzlich kann die andere Härte der ersten Klingenzone durch Anbringen einer Hartstoffbeschichtung, insbesondere per Physical-Vapor-Deposition-Methode und/oder mittels Chemical-Vapor-Deposition-Methode, erzeugt werden.

Zweckmäßig kann das Verfahren einen Schritt f) aufweisen, gemäß welchem im Anschluss an den Schritt e) ein Anlassen der ersten Klingenzone erfolgt, um die andere Oberflächenhärte der ersten Klingenzone auf einen vorbestimmten anderen Härtewert einzustellen, der größer ist als der Härtewert der zweiten Klingenzone.

Zweckmäßig werden die Schritte des Verfahrens in der zeitlichen Reihenfolge a), b), c), d), e) durchgeführt. Gegebenenfalls können ergänzende Schritte zwischen den Schritten a), b), c), d), e) durchgeführt werden, insbesondere wie im folgenden Absatz vorgeschlagen.

Zweckmäßig kann zeitlich nach Schritt c) und zeitlich vor Schritt e), insbesondere und zeitlich vor Schritt d), ein Schritt c*) durchgeführt werden, gemäß welchem ein Schleifen des Stahlbands erfolgt, um Schneiden für die zumindest eine Klinge zu erzeugen. Alternativ oder zusätzlich kann zeitlich nach Schritt c) und zeitlich vor Schritt e), ein Schritt d*) durchgeführt werden, gemäß welchem das Stahlband mit wenigstens einer Solltrennstelle für eine Abtrennung der wenigstens einen Klinge versehen wird. Zweckmäßig kann zeitlich nach dem Schritt f) ein Schritt f*) des Verfahrens durchgeführt werden, gemäß welchem die wenigstens eine Klinge von einem Rest des Stahlbands abgetrennt wird.

Zweckmäßig wird das Stahlband im Zuge des Schritts b) bis auf 1.100 °C erwärmt.

Zweckmäßig wird das Stahlband im Zuge des Schritts c) bei 500 °C angelassen.

Zweckmäßig kann das Schleifen gemäß Schritt c*) bei Raumtemperatur erfolgen.

Zweckmäßig kann das Schlitzen gemäß Schritt d) bei Raumtemperatur erfolgt. Alternativ kann das Schlitzen so erfolgen, dass das Stahlbandmaterial dabei zumindest auf eine Temperatur für Schritt e) erwärmt wird.

Zweckmäßig wird die erste Klingenzone im Zuge des Schritts e) bis auf 900 °C erwärmt.

Zweckmäßig wird die erste Klingenzone im Zuge des Schritts f) bei 200 °C angelassen.

Ein erfindungsgemäßes Mähwerk ist zur Verwendung in einem Rasenmäher und/oder in einer Motorsense ausgebildet. Dabei weist das Mähwerk zumindest eine erfindungsgemäße Klinge wie vorstehend beschrieben auf. Insbesondere weist das Mähwerk mehrere derartige Klingen, mehr insbesondere drei derartige Klingen, auf. Die Klingen können, insbesondere werkzeugfrei, auswechselbar ausgebildet sein. Das Mähwerk hat eine Rotoreinrichtung, welche zumindest ein Klingenlagerelement zur beweglichen Lagerung der Klinge aufweist. Insbesondere ist je Klinge des Mähwerks ein eigenes Klingenlagerelement vorgesehen. Die Rotoreinrichtung ist zur Drehung um eine Rotor-Drehachse des Mähwerks herum ausgebildet. Insbesondere sind alle Klingen des Mähwerks um die Rotor-Drehachse herum äquidistant zueinander und mit einheitlichem Radialabstand zu der Rotor-Drehachse angeordnet bzw. gelagert.

Zweckmäßig weist das Mähwerk eine Mehrzahl von, insbesondere baugleichen, Klingen auf.

Zweckmäßig weist das Mähwerk eine Mehrzahl von Klingenlagerelementen auf, die baugleich ausgebildet sein können. Insbesondere entspricht eine Anzahl an Klingen der Anzahl Klingenlagerelementen.

Zweckmäßig kann die Rotoreinrichtung eine Klingen- bzw. Messerscheibe aufweisen, insbesondere sein.

Die Klinge kann bei Drehung der Rotoreinrichtung um die Rotor-Drehachse herum über einen äußeren Rand der Rotoreinrichtung hinausragen und/oder sich radial von dem Klingenlagerelement weg erstrecken.

Das Mähwerk, insbesondere die Rotoreinrichtung, kann eine, insbesondere zentral angeordnete, Wellenaufnahme zur Aufnahme einer Antriebswelle eines Rasenmähers und/oder einer Motorsense aufweisen.

Ein erfindungsgemäßer Rasenmäher und/oder eine erfindungsgemäße Motorsense weist ein erfindungsgemäßes Mähwerk wie vorstehend beschrieben auf. Zudem hat der Rasenmäher und/oder die Motorsense eine, beispielsweise elektrische, Antriebseinrichtung zum Drehen der Rotoreinrichtung des Mähwerks um die Rotor-Drehachse. Bei Drehen der Rotoreinrichtung des Mähwerks um die Rotor-Drehachse kann die wenigstens eine Klinge des Mähwerks sich fliehkraftbedingt zum Schneiden von Schnittgut ausrichten. Zweckmäßig kann die wenigstens eine Klinge derart gelagert sein, dass bei Drehen der Rotoreinrichtung um die Rotor-Drehachse ein Wegbewegen bzw. ein Ausweichen der Klinge bei einem Auftreffen auf ein Hindernis ermöglicht ist.

Zweckmäßig kann der Rasenmäher ein, insbesondere autonomer mobiler, Roboterrasenmäher sein.

Zweckmäßig kann die Motorsense ein Freischneider, ein Grastrimmer und/oder ein Rasentrimmer sein.

### KURZBESCHREIBUNG DER ZEICHNUNGEN

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

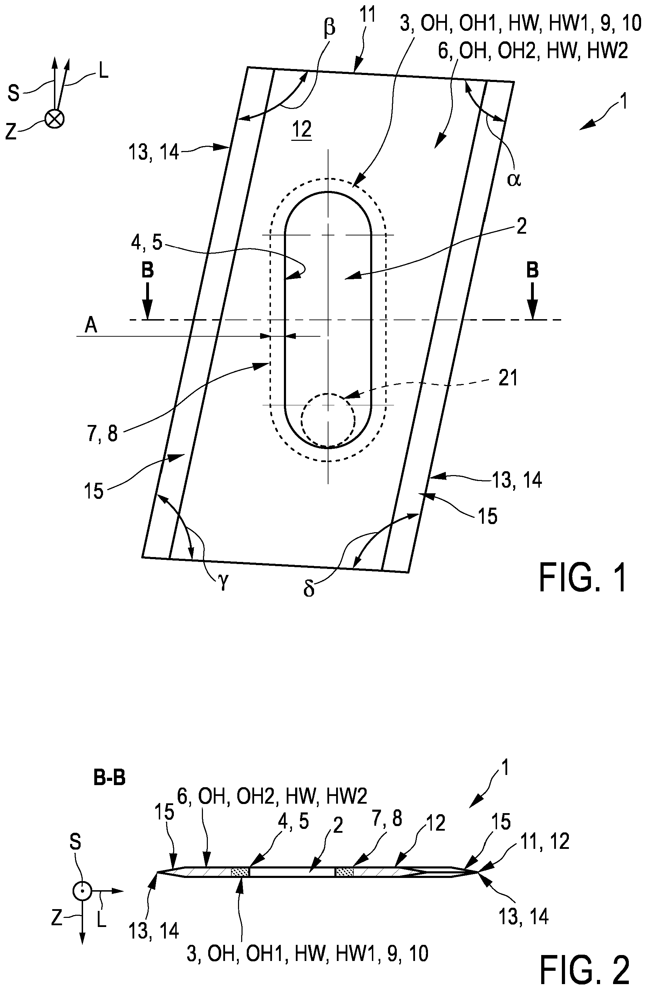

- Fig. 1: zeigt in schematischer Draufsicht eine Ausführungsform einer erfindungsgemäßen Klinge in ihrer Dickenrichtung betrachtet,
- Fig. 2: in schematischer Schnittdarstellung bezüglich einer in der Darstellung der Fig. 1 eingezeichneten Schnittlinie B-B die Klinge nach Fig. 1,

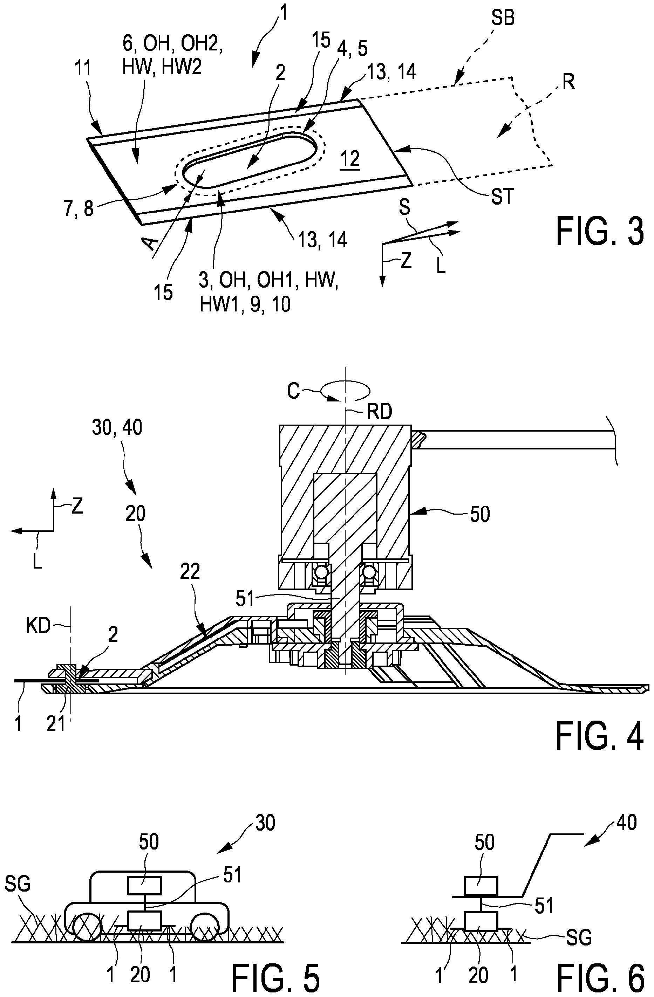

- Fig. 3: in schematischer Perspektivdarstellung die Klinge nach den Fig. 1 und 2, die gemäß einem erfindungsgemäßen Verfahren hergestellt ist bzw. wird,
- Fig. 4: beispielhaft eine Ausführungsform eines erfindungsgemäßen Mähwerks für einen Rasenmäher und/oder für eine Motorsense in einem Axialschnitt,
- Fig. 5: beispielhaft in grobschematischer Seitenansicht eine Ausführungsform eines erfindungsgemäßen Rasenmähers, und
- Fig. 6: beispielhaft in grobschematischer Seitenansicht eine Ausführungsform einer erfindungsgemäßen Motorsense.

### DETAILLIERTE BESCHREIBUNG DER AUSFÜHRUNGSBEISPIELE

Eine Klinge 1 ist für ein Mähwerk 20 vorgesehen und/oder ausgebildet. Das Mähwerk 20 ist für einen Rasenmäher 30 und/oder für eine Motorsense 40 vorgesehen und/oder ausgebildet.

Die Klinge 1 weist einen Schlitz 2 auf. Der Schlitz 2 ist entlang einer Schlitzrichtung S der Klinge 1 längserstreckt. Der Schlitz 2 ist dazu ausgebildet, ein Klingenlagerelement 21 des Mähwerks 20 aufzunehmen. Dabei ist das Klingenlagerelement 21 derart in dem Schlitz 2 aufnehmbar, dass die Klinge 1 um das aufgenommene Klingenlagerelement 21 herum drehbar und entlang der Schlitzrichtung S relativ zu dem aufgenommenen Klingenlagerelement 21 verschiebbar ist.

Die Klinge 1 hat eine erste Klingenzone 3 sowie eine von der ersten Klingenzone 3 verschiedene zweite Klingenzone 6. Der Schlitz 2 weist einen umlaufenden Schlitzrand 5 auf. Zumindest ein Randabschnitt 4 des Schlitzrands 5 verläuft innerhalb der ersten Klingenzone 3. Die Klinge 1 hat eine Zonengrenze 7, wobei die erste Klingenzone 3 sich an der Zonengrenze 7 an die zweite Klingenzone 6 anschließt. Die erste Klingenzone 3 ist härter ausgebildet als die zweite Klingenzone 6.

Es können unter Umständen mehrere erste Klingenzonen 3 vorhanden sein, wobei in jeder Klingenzone 3 ein Randabschnitt 4 des Schlitzrands 5 verläuft. Vorliegend verläuft der Schlitzrand 5 aber vollständig innerhalb einer einzigen ersten Klingenzone 3. Die Zonengrenze 7 verläuft beispielsweise vollständig um den Schlitz 2 herum.

Beispielsweise verläuft die Zonengrenze 7 in einem Abstand A zu dem Schlitzrand 5. Vorliegend verläuft die Zonengrenze 7 mit gleichbleibendem Normalabstand A, insbesondere parallel, zu dem Schlitzrand 5. Der Abstand A beträgt beispielsweise maximal 2 mm. Der Abstand A kann minimal 0,1 mm betragen.

Die zweite Klingenzone 6 weist beispielsweise eine Härte OH, OH2 auf. Die Härte OH, OH2 der zweiten Klingenzone 6 kann einen Härtewert HW, HW2 von 400 HV bis 500 HV, vorliegend von 450 HV, aufweisen. Der Härtewert HW, HW2 kann insbesondere als Durchschnitt mehrerer, insbesondere wenigstens dreier, punktueller Prüfwerte für die Härte OH, OH2 ermittelt werden. Die Härte OH, OH2 der zweiten Klingenzone 6 kann unter Umständen punktuell von dem Härtewert HW, HW2 abweichen.

Die erste Klingenzone 3 hat eine, insbesondere andere, Härte OH, OH1. Die Härte OH, OH1 der ersten Klingenzone 3 weist einen, insbesondere anderen, Härtewert HW, HW1 auf. Dieser Härtewert HW, HW1 kann 800 HV bis 900 HV betragen, beispielsweise wie vorliegend 850 HV. Die Härte OH, OH1 der ersten Klingenzone 3 kann punktuell von dem Härtewert HW, HW1 abweichen, insbesondere wobei der Härtewert HW, HW1 als Durchschnitt mehrerer, insbesondere wenigstens dreier, Prüfwerte für die Härte OH, OH1 der ersten Klingenzone 3 ermittelt wird.

Beispielsweise weist ein Material der ersten Klingenzone 3 einen Vergütungsstahl auf oder besteht aus einem solchen Vergütungsstahl. Alternativ oder zusätzlich weist ein Material der zweiten Klingenzone 6 einen Vergütungsstahl auf oder besteht aus einem solchen Vergütungsstahl. Der Vergütungsstahl des Materials der ersten Klingenzone 3 und/oder der zweiten Klingenzone 6 kann einen Kohlenstoffanteil von weniger als 0,7 Masseprozent haben.

Beispielsweise ist die erste Klingenzone 3 martensitisch gehärtet. Die erste Klingenzone 3 kann mittels Induktionserwärmung und/oder mittels Lasererwärmung martensitisch gehärtet sein.

Zur martensitischen Härtung der ersten Klingenzone 3 kann sich an die Induktionserwärmung und/oder an die Lasererwärmung direkt ein Abschreckvorgang zum Entwärmen anschließen. Die Entwärmung kann an Umgebungsluft und/oder in einem Flüssigkeitsbad und/oder in einem Flüssigkeitsstrom erfolgen.

Beispielsweise ist die erste Klingenzone 3 nitriert. Alternativ ist die erste Klingenzone 3 nitrocarboriert. Weiter alternativ ist die erste Klingenzone 3 carbonitriert. Weiter alternativ ist die erste Klingenzone 3 einsatzgehärtet.

Die erste Klingenzone 3 kann eine angeschweißte Panzerungsschicht 9 aufweisen oder eine angeschweißte Panzerungsschicht 9 sein. Ein Material der Panzerungsschicht 9 kann einen Schnellarbeitsstahl aufweisen oder aus einem solchen Schnellarbeitsstahl bestehen.

Beispielsweise weist die erste Klingenzone 3 eine Hartstoffbeschichtung 10 auf oder ist eine solche Hartstoffbeschichtung 10. Die Hartstoffbeschichtung 10 kann eine PVD-Hartstoffbeschichtung oder eine CVD-Hartstoffbeschichtung sein. Ein Material der Hartstoffbeschichtung 10 kann Titancarbid und/oder Titannitrid aufweisen bzw. aus Titancarbid und/oder aus Titannitrid bestehen.

Die Klinge 1 hat vorliegend eine Außenkontur 11. Die Außenkontur 11 beschreibt beispielsweise ein Parallelogramm 12 ein. Das Parallelogramm 12 hat vorliegend einander entlang einer kurzen Diagonale des Parallelogramms 12 gegenüberliegende stumpfe Innenwinkel β, δ. Zudem hat das Parallelogramm 12 vorliegend spitze Innenwinkel α, γ, die einander entlang einer langen Diagonale des Parallelogramms 12 gegenüberliegend angeordnet sind.

Die Außenkontur 11 weist vorliegend Außenkanten 13 auf, die parallel zueinander erstreckt sind. Die Außenkanten 13 bilden jeweils eine Schneidkante 14 der Klinge 1 zum Durchtrennen eines Schnittguts SG aus. Die Schlitzrichtung S verläuft vorliegend schräg zu den Außenkanten 13. Die Schlitzrichtung S kann in etwa auf einer Diagonalen des Parallelogramms 12 verlaufen, welche Diagonale die Ecken des Parallelogramms 12 miteinander verbindet, an welchen jeweils einer der stumpfen Innenwinkel β, δ gescheitelt ist. Vorliegend verläuft die Schlitzrichtung S also in etwa entlang der kurzen Diagonale des Parallelogramms 12.

Beispielsweise sind die Schneidkanten 14 jeweils von einer Schneide 15 der Klinge 1 aufgewiesen. Die Schneiden 15 der Klinge 1 sind vorliegend härter als die zweite Klingenzone 6.

Beispielsweise weist ein Material der Schneiden 15 einen Schnellarbeitsstahl auf oder besteht aus einem solchen Schnellarbeitsstahl. Das Material der Schneiden 15 kann an das Material der zweiten Klingenzone 6, insbesondere im Abstand von der ersten Klingenzone 3, angeschweißt sein.

Das Mähwerk 20 weist zumindest eine Klinge 1 auf. Vorliegend hat das Mähwerk 20 drei Klingen 1. Das Mähwerk 20 hat eine Rotoreinrichtung 22, welche zumindest ein Klingenlagerelement 21 zur beweglichen Lagerung der wenigstens einen Klinge 1 des Mähwerks 20 aufweist. Vorliegend hat die Rotoreinrichtung 22 drei Klingenlagerelemente 21, jeweils zur beweglichen Lagerung einer der Klingen 1 des Mähwerks 20. Die Rotoreinrichtung 22 ist zur Drehung um eine Rotor-Drehachse RD des Mähwerks 20 herum ausgebildet. Die Klingen 1 des Mähwerks 20 sind beispielsweise entlang einer um die Rotor-Drehachse RD herum, insbesondere in einer senkrecht zu der Rotor-Drehachse RD orientierten Ebene verlaufenden, Umfangsrichtung C äquidistant zueinander angeordnet.

Jede der Klingen 1 des Mähwerks 20 ist um eine Lagerelementachse KD des den Schlitz 2 der betreffenden Klinge 1 durchragenden Klingenlagerelements 21 drehbeweglich.

Der Rasenmäher 30 und/oder die Motorsense 40 weist das Mähwerk 20 auf. Zudem hat der Rasenmäher 30 und/oder die Motorsense 40 eine Antriebseinrichtung 50 zum Drehen der Rotoreinrichtung 22 des Mähwerks 20 um die Rotor-Drehachse RD.

Die Antriebseinrichtung 50 hat beispielsweise eine Antriebswelle 51, die mit dem Mähwerk 20, insbesondere lösbar, antriebsverbindbar ist. Zum Antriebsverbinden des Mähwerks 20 mit der Antriebseinrichtung 50 kann das Mähwerk 20 eine Nabeneinrichtung zum drehmomentübertragenden Aufnehmen der Antriebswelle 51 aufweisen.

Die Schneiden 15 der Klinge 1 sind insbesondere entlang einer Längserstreckungsrichtung L der Klinge 1 längserstreckt.

Die Klinge 1 kann im Wesentlichen plattenförmig ausgebildet sein. Die Klinge 1 weist eine Klingendickenrichtung Z auf, die senkrecht zu der Längserstreckungsrichtung L und senkrecht zu der Schlitzrichtung S erstreckt ist.

Die Rotor-Drehachse RD kann im Wesentlichen entlang der Dickenrichtung Z und/oder im Wesentlichen parallel zu der Lagerelementachse KD erstreckt sein.

Die Klinge 1 wird beispielsweise mittels eines Verfahrens hergestellt, welches einen Schritt a) aufweist. Gemäß dem Schritt a) wird ein Stahlband SB bereitgestellt, welches das Material für zumindest die zweite Klingenzone 6 wenigstens einer verfahrensgemäß herzustellenden Klinge 1 aufweist. Insbesondere weist das Stahlband SB das Material für die zweite Klingenzone 6 mehrerer Klingen 1 auf, die von dem Stahlband SB, insbesondere zum Schluss des Verfahrens, nacheinander oder gleichzeitig vereinzelbar sind und/oder vereinzelt werden.

Das Verfahren weist zudem einen Schritt b) auf. Gemäß dem Schritt b) wird das bereitgestellte Stahlband SB austenitisiert. Zweckmäßig wird das Stahlband SB im Zuge des Schritts b) bis auf 1.100 °C erwärmt.

Das Verfahren weist zudem einen Schritt c) auf. Gemäß dem Schritt c) wird das austenitisierte Stahlband SB angelassen. Durch das Anlassen des Stahlbands SB bei Durchführung des Schritts c) wird die Härte OH, OH2 des Materials für zumindest die zweite Klingenzone 6 der Klinge 1 eingestellt. Zweckmäßig wird das Stahlband SB im Zuge des Schritts c) bei 500 °C angelassen.

Das Verfahren weist ferner einen Schritt d) auf. Gemäß dem Schritt d) wird das angelassene Stahlband SB geschlitzt, um den Schlitz 2 der Klinge 1 zu erzeugen. Das Schlitzen gemäß Schritt d) kann bei Raumtemperatur erfolgen, insbesondere wenn es mittels Stanzens vollzogen wird. Alternativ kann es aber auch denkbar sein, dass das Schlitzen mittels eines thermischen Trennverfahrens, insbesondere mittels eines Lasertrennverfahrens, vorgenommen wird.

Das Verfahren weist zudem einen Schritt e) auf. Gemäß dem Schritt e) wird eine andere Härte OH, OH1 der ersten Klingenzone 3 der Klinge 1 derart erzeugt, dass die andere Härte OH, OH1 der ersten Klingenzone 3 größer ist als die Härte OH, OH2 der zweiten Klingenzone 6. Zweckmäßig wird die erste Klingenzone 3 im Zuge des Schritts e) bis auf 900 °C erwärmt.

Das Verfahren kann einen Schritt f) aufweisen, gemäß welchem im Anschluss an den Schritt e) ein Anlassen der ersten Klingenzone 3 erfolgt, um die anderen Oberflächenhärte OH, OH1 der ersten Klingenzone 3 auf einen vorbestimmten anderen Härtewert HW, HW1 einzustellen, welcher andere Härtewert HW, HW1 größer ist als der Härtewert HW, HW2 der zweiten Klingenzone 6. Zweckmäßig kann die erste Klingenzone 3 im Zuge des Schritts f) bei 200 °C angelassen werden.

Zweckmäßig kann beispielsweise zeitlich nach dem Schritt c) und zeitlich vor dem Schritt d) ein Schritt c*) des Verfahrens durchgeführt werden. Gemäß dem Schritt c*) des Verfahrens kann das Stahlband SB geschliffen werden, um Schneiden 15 für die Klinge 1 zu erzeugen und/oder zu schärfen. Zweckmäßig kann das Schleifen gemäß dem Schritt c*) bei Raumtemperatur erfolgen.

Beispielsweise kann zeitlich nach dem Schritt c*) und zeitlich vor dem Schritt e) ein Schritt d*) des Verfahrens durchgeführt werden. Gemäß dem Schritt d*) kann das Stahlband SB mit wenigstens einer Solltrennstelle ST für eine Abtrennung der Klinge 1 versehen werden. Zweckmäßig kann zeitlich nach dem Schritt f) ein Schritt f*) durchgeführt werden, gemäß welchem die Klinge 1 von einem Rest R des Stahlbands SB, insbesondere an der Solltrennstelle ST, abgetrennt wird.

Die Härte OH, OH1, OH2 kann innerhalb der ersten Klingenzone 3 und/oder innerhalb der zweiten Klingenzone 6 unter Umständen fertigungsbedingt variieren. Unter Umständen kann die zweite Klingenzone 6 punktuell auch härter sein als ein Bereich und/oder Punkt innerhalb der ersten Klingenzone 3, was insbesondere durch die Betrachtung von Durchschnittswerten aus mehreren Härteprüfungen je Klingenzone 3, 6 für die Ermittlung des betreffenden Härtewerts HW, HW1, HW2 berücksichtigt werden kann.

Das Erzeugen der anderen Härte OH, OH1 gemäß Schritt e) kann durch Induktionshärtung und/oder durch Laserhärtung erfolgen. Alternativ oder zusätzlich kann das Erzeugen der anderen Härte OH, OH1 gemäß Schritt e) durch Nitrieren und/oder Nitrocarburieren und/oder Carbonitrieren und/oder Einsatzhärten erfolgen. Alternativ oder zusätzlich kann das Erzeugen der anderen Härte OH, OH1 der ersten Klingenzone 3 durch Anschweißen einer Panzerungsschicht 9 an das Stahlband SB erfolgen. Alternativ oder zusätzlich kann das Erzeugen der anderen Härte OH, OH1 der ersten Klingenzone 3 durch Beschichten des Stahlbands SB mit einer Hartstoffbeschichtung 10, insbesondere mit einer PVD-Hartstoffbeschichtung oder mit einer CVD-Hartstoffbeschichtung, erfolgen.

## Patentansprüche

1. Klinge (1) für ein Mähwerk (20), wobei die Klinge (1) aufweist:
- einen entlang einer Schlitzrichtung (S) der Klinge (1) längserstreckten Schlitz (2), der dazu ausgebildet ist, ein Klingenlagerelement (21) des Mähwerks (20) derart aufzunehmen, dass die Klinge (1) um das aufgenommene Klingenlagerelement (21) herum drehbar und entlang der Schlitzrichtung (S) relativ zu dem aufgenommenen Klingenlagerelement (21) verschiebbar ist,
- eine erste Klingenzone (3), innerhalb welcher zumindest ein Randabschnitt (4) eines umlaufenden Schlitzrandes (5) des Schlitzes (2) verläuft, und
- eine zweite Klingenzone (6), die sich an einer Zonengrenze (7) der Klinge (1) an die erste Klingenzone (3) anschließt,
- wobei die erste Klingenzone (3) härter als die zweite Klingenzone (6) ist.

2. Klinge (1) nach dem vorhergehenden Anspruch,
- wobei der Schlitzrand (5) vollständig innerhalb der ersten Klingenzone (3) verläuft,
- wobei die Zonengrenze (7) um den Schlitz (2) herumverläuft.

3. Klinge (1) nach einem der vorhergehenden Ansprüche,
- wobei die Zonengrenze (7) in einem Abstand (A) von maximal 2 mm zu dem Schlitzrand (5) verläuft.

4. Klinge (1) nach einem der vorhergehenden Ansprüche,
- wobei eine Härte (OH, OH2) der zweiten Klingenzone (6) einen Härtewert (HW, HW2) von 400 HV bis 500 HV, insbesondere von 450 HV, aufweist.

5. Klinge (1) nach einem der vorhergehenden Ansprüche,
- wobei eine Härte (OH, OH1) der ersten Klingenzone (3) einen Härtewert (HW, HW1) von 800 HV bis 900 HV, insbesondere von 850 HV, aufweist.

6. Klinge (1) nach einem der vorhergehenden Ansprüche,
- wobei ein Material der ersten Klingenzone (3) und/oder der zweiten Klingenzone (6) einen Vergütungsstahl, insbesondere mit einem Kohlenstoffanteil von weniger als 0,7 Masseprozent, aufweist oder aus einem solchen Vergütungsstahl besteht.

7. Klinge (1) nach dem vorhergehenden Anspruch,
- wobei die erste Klingenzone (3), insbesondere mittels Induktionserwärmung und/oder mittels Lasererwärmung, martensitisch gehärtet ist.

8. Klinge (1) nach einem der vorhergehenden Ansprüche,
- wobei die erste Klingenzone (3) nitriert und/oder nitrocarburiert und/oder carbonitriert und/oder einsatzgehärtet ist.

9. Klinge (1) nach einem der vorhergehenden Ansprüche,
- wobei die erste Klingenzone (3) eine angeschweißte Panzerungsschicht (9) aufweist oder ist,
- insbesondere wobei ein Material der Panzerungsschicht (9) einen Schnellarbeitsstahl aufweist oder aus einem solchen Schnellarbeitsstahl besteht.

10. Klinge (1) nach einem der vorhergehenden Ansprüche,
- wobei die erste Klingenzone (3) eine Hartstoffbeschichtung (10), insbesondere eine PVD-Hartstoffbeschichtung oder eine CVD-Hartstoffbeschichtung, aufweist oder ist,
- insbesondere wobei ein Material der Hartstoffbeschichtung (10) Titancarbid und/oder Titannitrid aufweist oder wobei das Material der Hartstoffbeschichtung (10) aus Titancarbid und/oder aus Titannitrid besteht.

11. Klinge (1) nach einem der vorhergehenden Ansprüche,
- wobei eine Außenkontur (11) der Klinge (1) ein Parallelogramm (12), insbesondere mit einem stumpfen Innenwinkel (β, δ), einbeschreibt,
- wobei zwei parallel zueinander und schräg zu der Schlitzrichtung (S) erstreckte Außenkanten (13) der Außenkontur (11) jeweils eine Schneidkante (14) der Klinge (1) zum Durchtrennen eines Schnittguts (SG) ausbilden,
- insbesondere wobei die Schneidkanten (14) jeweils von einer Schneide (15) der Klinge (1) aufgewiesen und die Schneiden (15) härter als die zweite Klingenzone (6) sind.

12. Verfahren für eine Herstellung wenigstens einer Klinge (1) nach einem der vorhergehenden Ansprüche,
- wobei das Verfahren die Schritte aufweist:
a) Bereitstellen eines Stahlbandes (SB), welches das Material für zumindest die zweite Klingenzone (6) der wenigstens einen Klinge (1) aufweist;
b) Austenitisieren des bereitgestellten Stahlbandes (SB);
c) Anlassen des austenitisierten Stahlbandes (SB), um eine Härte (OH, OH2) des Materials für zumindest die zweite Klingenzone (6) der wenigstens einen Klinge (1) einzustellen;
d) Schlitzen des angelassenen Stahlbandes (SB), um den Schlitz (2) der wenigstens einen Klinge (1) zu erzeugen;
e) Erzeugen einer anderen Härte (OH, OH1) der ersten Klingenzone (3) der zumindest einen Klinge (1), so dass die andere Härte (OH, OH1) der ersten Klingenzone (3) größer ist als die Härte (OH, OH2) der zweiten Klingenzone (6).

13. Mähwerk (20) für einen Rasenmäher (30) und/oder für eine Motorsense (40), wobei das Mähwerk (20) aufweist:
- zumindest eine Klinge (1) nach einem der Ansprüche 1 bis 11,
- eine Rotoreinrichtung (22), welche zumindest ein Klingenlagerelement (21) zur beweglichen Lagerung der Klinge (1) aufweist,
- wobei die Rotoreinrichtung (22) zur Drehung um eine Rotor-Drehachse (RD) des Mähwerks (20) herum ausgebildet ist.

14. Rasenmäher (30) und/oder Motorsense (40), wobei der Rasenmäher (30) und/oder die Motorsense (40) aufweist,
- ein Mähwerk (20) nach dem vorhergehenden Anspruch, und
- eine Antriebseinrichtung (50) zum Drehen der Rotoreinrichtung (22) des Mähwerks (20) um die Rotor-Drehachse (RD).
